# EUROPEAN PATENT SPECIFICATION

(11) **EP 4 185 458 B1**
(45) Date of publication and mention of the grant of the patent: **11.12.2024**
(21) Application number: 22747752.8
(22) Date of filing: 06.07.2022
(51) Int. Cl.: B29D 99/00, B29C 70/48, B29C 70/54, B29L 31/08

(54) **A METHOD FOR MANUFACTURING A WIND BLADE AND A WIND BLADE MANUFACTURED WITH SAID METHOD**
VERFAHREN ZUR HERSTELLUNG EINER WINDSCHAUFEL UND MIT DIESEM VERFAHREN HERGESTELLTE WINDSCHAUFEL
PROCÉDÉ DE FABRICATION D'UNE PALE D'ÉOLIENNE ET PALE D'ÉOLIENNE FABRIQUÉE AVEC LEDIT PROCÉDÉ

(30) Priority: 06.07.2021 IT 202100017771
(43) Date of publication of application: 31.05.2023
(73) Proprietor: Bladeworks S.r.l., 80133 Napoli (IT)
(72) Inventor: D'ETTORE, Angelo, 81030 Castel Volturno (CE) (IT)
(74) Representative: Studio Torta S.p.A.
(86) International application number: PCT/IB2022/056231
(87) International publication number: WO 2023/281407

(56) References cited:
- EP-A1- 1 310 351
- EP-A1- 2 570 254
- EP-A1- 2 728 172
- WO-A1-2013/061016
- US-A1- 2019 202 143

## Description

### Technical Field

This invention relates to a method for manufacturing a wind blade and a wind blade manufactured with said method.

### Background

A blade of a wind turbine generally comprises a root for connecting the blade to the hub; a support frame connected to the root; and a casing that defines the wing profile of the blade and is supported by the support frame.

The blades of wind turbines reach great lengths and are placed under a lot of stress by the wind during operation. The stresses are transmitted from the casing to the support frame, which is configured to resist the stresses.

The support frame, as shown in the documents US 2009/0136355 A1 and US 2010/0068065 A1, basically comprise a tubular spar that, in cross section, has a rectangular shape. In more detail, the tubular spar comprises two parallel slabs facing each other and designed to be connected to the casing; and two parallel webs facing each other. In use, the slabs are directly in contact with the casing or, in some cases, themselves form part of the casing and of the blade profile and are subject to stresses of bending moment, while the webs are mainly subject to shear stresses.

In particular, the known production techniques, for example, from the documents WO 2009/153341, WO 2009/153342, and WO 2009/153343 involve moulding the two slabs and the two webs, and connecting the slabs and webs together, mainly by gluing, to create the tubular spar.

An alternative production method involves moulding two U-shaped elements and joining, by gluing, the two U-shaped elements as shown in the document US 2005/0214122.

EP 1 310 351 A1 discloses a method for making a windmill blade in a closed mould with a mould core inside mould parts for formation of a mould cavity, in which fibre material and core material are placed, in accordance with the preamble of claim 1.

EP 2 728 172 A1 discloses methods for forming rotor blades, rotor blade mold assemblies, and cores for rotor blade mold assemblies.

As can be seen in the prior art, a blade is manufactured using numerous steps and with numerous components, some of which are glued together, for example the slabs of the spar are glued to the casing. This entails complex processes, long production times, and a danger of breaking some internal components or the imperfect hold of the steps for gluing the various components together.

### Summary

One purpose of this invention is to provide a method to manufacture a blade of a wind turbine that reduces the drawbacks of the prior art.

Another purpose of this invention is to provide a method for manufacturing a blade of a wind turbine that obtains a blade with a simple and less costly process, but, at the same time, one that is resistant to loads.

According to this invention, a method is provided for manufacturing a blade of a wind turbine according to the attached claim 1, with preferred embodiments defined in claims 2 to 14. The invention also provides a wind blade manufactured by this method, as defined in claim 15 with preferred embodiments defined in claims 16 and 17.

Thanks to this invention, the blade manufacturing process reduces the times and costs for manufacturing said blade, together with the reduction of the structural weight of the blade and/or greater resistance to the stresses of said blade.

In addition, in comparison to the prior art, it reduces the waste produced during the blade manufacturing process.

### Brief Description of the Drawings

Additional features and advantages of this invention will be clear from the description that follows of its non-limiting embodiments, with reference to the attached figures, in which:
- Figure 1 is a side view of a blade manufactured according to this invention;
- Figure 2 is a cross-section view, with parts removed for clarity, of the blade in Figure 1;
- Figure 3 is a simplified diagram of one step of the method for manufacturing the blade in Figure 1;
- Figure 4 is a simplified diagram of another step of the method for manufacturing the blade in Figure 1;
- Figure 5 is a simplified diagram of another step of the method for manufacturing the blade in Figure 1; and
- Figure 6 is a schematic view, from above, of a mould for manufacturing the blade in Figure 1.

### Description of Embodiments

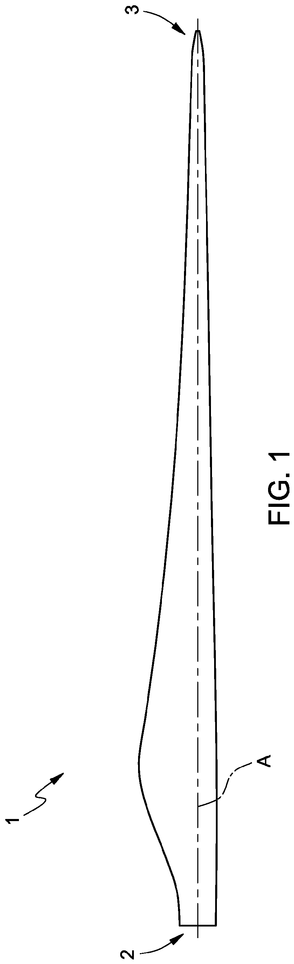

With reference to Figure 1, the reference number 1 indicates, as a whole, a blade of a wind turbine.

The blade 1 extends along a given axis A and is made of composite material comprising filaments arranged in at least two directions.

In addition, the blade 1 extends from one root 2 to a tip 3 of the blade; in particular, it extends along the axis A.

The root 2 of the blade 1, in use, is connected to a hub of a wind plant (not illustrated), in particular to a hub of a wind turbine (not illustrated).

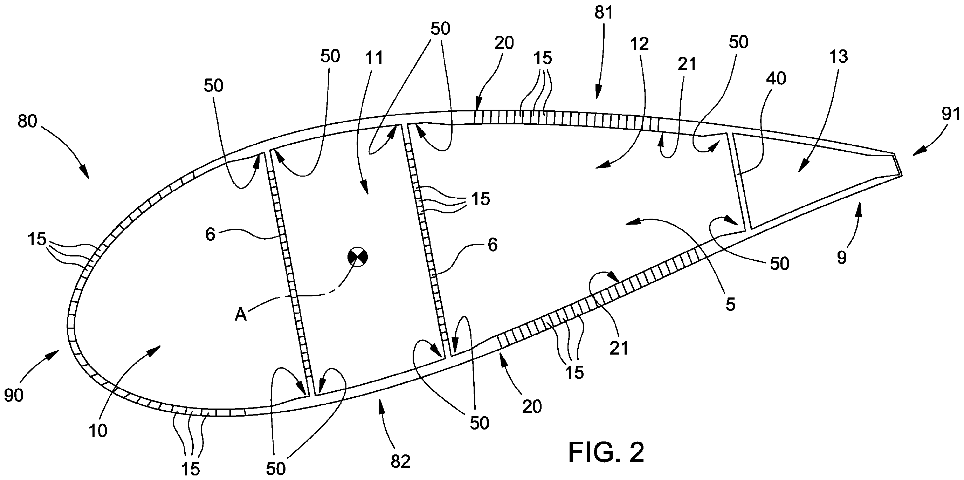

With reference to Figure 2, the blade 1 consists, internally, of a hollow structure 5 comprising two webs 6.

In an alternative embodiment, there are no webs 6 within the hollow structure 5 and, throughout the discussion of the invention, they are to be considered as optional.

In one alternative embodiment, the blade 1 comprises any number of webs greater or equal to one, by way of non-limiting example: one or three or four or five or six or seven or eight.

With reference to Figure 2, the hollow structure 5 comprises three cavities: one cavity 10 facing the leading edge 90 of the blade 1, one main cavity 11, and one cavity 12 facing the outlet edge 91 of the blade 1, wherein the main cavity 11 is arranged between cavity 10 and cavity 12.

In addition, the blade 1 comprises a back element 13 that is placed in a back area 9, adjacent to the outlet edge 91, of the blade 1 and that comprises, internally, a low-density foam. In particular, the layer of low-density foam comprises polyurethane material having a density that ranges from 10 kg/m³ to 100 kg/m³, in particular 30, 40, 50 kg/m³.

In addition, the structure of the blade 1 has a layer of composite material, in particular comprising fibres and resin, that extends from the outer surface 20 of the blade 1 to the inner surface 21 of the blade 1. In particular, the fibres comprise filaments arranged in at least two, incident directions, in particular directions that are perpendicular to each other.

In more detail, the layer of composite material is single and is made in a single step, in the sense that there are no parts glued together but it is made as a single, integral piece.

In a preferred, but non-limiting, embodiment of this invention, in some areas of the blade 1, the structure comprises one or more core elements 15 that are embedded in the composite material between the outer surface 20 and the inner surface 21 and form a single whole with the composite material structure. In other words, said core elements 15 are embedded and integrated within the composite material structure.

In a preferred, but non-limiting, embodiment, the core elements 15 are distributed and embedded, at least for a section, in a front portion 80 of the blade 1, which comprises the leading edge 90 of the blade 1, and which preferably is located at least partially around the cavity 10, and/or in a back portion 81 of the blade 1, which comprises the outlet edge of the blade 91, and, preferably, is situated at least partially around another cavity 12.

Usually, the core elements 15 comprise a PVC or PET or Balsa material or other core materials, in particular having a density that ranges from 40 kg/m³ to 300 Kg/m³, in particular 60 or 80 kg/m³.

In a central portion 82 of the blade 1 that is arranged between the front portion 80 and the back portion 81, in a preferred embodiment of this invention, the structure of the blade 1 only consists of the composite material, comprising fibre sheets and resin, preferably without core elements 15. As a result, the structure of the central portion 82 of the blade 1 defines a continuous structure without interruptions in material comprising, preferably exclusively, fibre sheets and resin. In other words, in some areas of the blade 1, in particular some areas in the central portion 82 of the blade 1, the structure of the blade 1 consists of a single layer comprising fibre sheets and resin that goes from the outer surface 20 of the blade 1 to the inner surface 21 thus defining both a portion of the outer surface 20 of the blade 1 and an inner surface 21 of the blade 1, in particular of the cavity 5.

In addition, in the portions of the blade 1, for example in at least parts of the front portion 80 and in at least parts of the back portion 81, wherein there are core elements 15, these core elements 15 are integrated and completely enveloped by the composite material. In particular, they are incorporated inside the composite material and enveloped by the resin and fibres forming, thus, a single and integral structure, in particular without using glue.

In addition, in the embodiment of the blade 1 wherein there are one or more webs 6, the at least one web 6 forms a single structure, in particular integral and integrated together with the central portion 82 of the blade, in particular a single, continuous structure, in particular without interruption or discontinuity of material.

In other words, the one or more webs 6 constitute a single and integrated structure with the portions of the blade 1, in particular with the central portion 82 of the blade 1, and are formed of a single piece, preferably not glued.

In more detail, the at least one web 6 comprises fibre sheets and resin and may comprise core elements 15 embedded in the fibre sheets and resin so as to form a single structure.

The webs 6 are manufactured together with the rest of the structure of the blade 1, in particular together with the central portion 82 of the blade 1. As a result, they constitute a single and integral structure, preferably without using glue and pieces glued together as in the prior art.

In particular, the structure of the blade 1, in particular along portions of the inner surface 21, and the at least one web 6 form angles 50 where there is continuity of material. In more detail, in the angles 50 there is no glue to hold the webs 6 together and the structure of the blade 1, in particular along the inner surface 21.

In addition, the back element 13 is arranged between the back portion 81 of the blade 1, in particular along the inner surface 21, and is integrated into the structure of the blade 1. In particular, the back element 13 is arranged and connected to two inner surfaces 21 of the blade 31 facing each other. The back element 13 is fixed along the inner surfaces 21 of the blade 1 facing each other at the back portion 81 of the blade 1, in particular at the outlet edge 91 of the blade 1.

In addition, the back element 13 is fixed along the inner surfaces 21 of the blade 1 facing each other during the process of infusion using injected resin, as will be illustrated in detail below, so as to become a single and integral piece.

In other words, the element 13 is not glued along the surfaces of the blade 1 but is integrated with them during the process of infusion of the blade 1, in particular during the injection of the material comprising resin. These gives the whole structure greater solidity.

In one preferred, but non-limiting, embodiment of this invention, the blade 1 comprises a back wall 40 in contact with the back element 13; in other words, in this embodiment, the back element 13 is arranged in the back portion 81 of the blade 1, in particular along the inner surface 21, and in contact with the back wall 40, and is integrated into the structure of the blade 1. The back wall 40 is fixed to the element 13 and to the structure of the blade 1, in particular along portions of the inner surfaces 21 facing each other, via the resin injected during the infusion process, preferably without using glue.

In more detail, the structure of the blade 1 that defines the outer surfaces 20 is a unitary structure comprising sheets of fibre material and resin and is held together by the resin, which defines an integral structure preferably without parts glued together. This gives the blade 1 greater strength, in general, and makes it lighter. In addition, the manufacturing process is simplified and produces less waste.

In more detail, the fibre sheets, the core elements 15, the back element 13, preferably the back wall 40, preferably the portions 80, 81, and 82 of the blade 1 form a unitary structure held together by the resin, which defines an integral structure, preferably without parts glued together. This gives the blade 1 greater strength, in general, and makes it lighter. In addition, the manufacturing process is simplified and produces less waste. In particular, the inner structure of the blade 1 and the back wall 40, or the back element 13, if there is no back wall 40, form angles 50 where there is continuity of material. In more detail, in the angles 50 there is no glue to hold the back wall 40 together with the inner structure of the blade 1.

In more detail, the at least one web 6 and/or the back wall 40 are not glued, as in the prior art, on the inner surfaces 21 of the blade 1 facing each other, in particular along the angles 50, but are made together with the layer of composite material of the portions of the blade 1 and define a single structure. In other words, the at least one web 6 and/or the back wall 40 and the portions of the blade 1 constitute a unitary structure preferably without discontinuity and/or interruption and/or elements glued together. In other words, the at least one web 6 and/or the back wall 40 and the portions of the blade 1 constitute a continuous unitary structure that does not have interruptions or discontinuities of material, or of another kind, and, as a result, is stronger because it does not have points of discontinuity. This unitary structure between the webs 6 and/or the back wall 40 and the portions of the blade 1 is made possible thanks to a single infusion of resinous material that is carried out based on the manufacturing method illustrated below. In particular, the blade 1 along the angles 50 has a continuous structure, without discontinuity of material.

In the embodiment with at least one web 6, the at least one web 6, the core elements 15, the back element 13, and preferably one or more of the portions 80, 81, and 82 of the blade 1, and preferably the back wall 40, form a unitary structure held together by the resin and that defines an integral structure without parts glued together. This gives the blade greater strength, in general, and makes it lighter. In addition, the manufacturing process is simplified and produces less waste.

The blade 1 is made using a single infusion with a method that will be described below.

In particular, the fibre sheets and, when present, the core elements 15, the back element 13, and the back wall 40, are held together and impregnated with the resin via a single infusion and, as a result, define a single and integral structure of the blade 1, which preferably has load-bearing features. As mentioned above, the single and integral structure of the blade 1 may comprise one or more webs 6. The portions 80, 81, and 82 of the blade 1 described are part of the single and integral structure of the blade 1 and, in fact, constitute, therefore, a single structure. In other words, the term "portions" does not indicate separate and/or disconnected parts, but just different areas of the same single and integral structure.

The blade 1 is manufactured using the production method of the blade 1 that will be illustrated below.

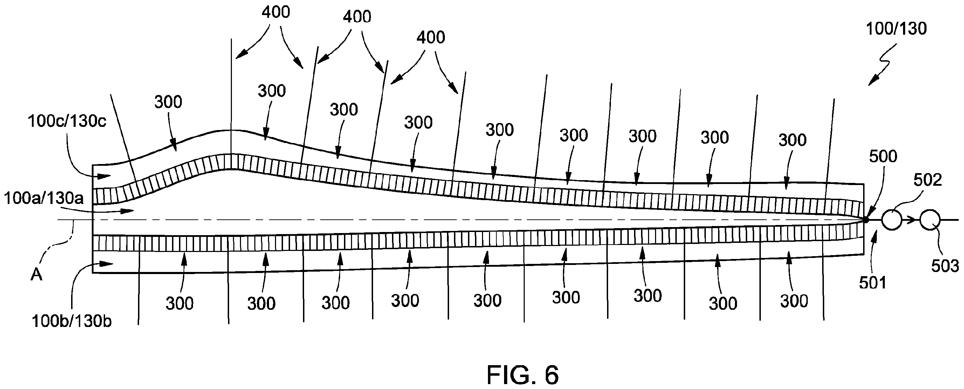

This method involves the use of two outer moulds 100 and 130, one of which is schematically illustrated in Figure 6.

The two outer moulds 100 and 130 can be re-used to implement the method multiple times.

In particular, the two outer moulds 100 and 130 can be re-sued to produce multiple blades in succession, in particular by implementing the production method of the blade, illustrated below, multiple times.

In particular, the two outer moulds 100 and 130 can be reused multiple times and, in particular, are single-use.

In particular, each of the two outer moulds 100 and 130 comprises a central portion 100a/130a and two side portions 100b/130b and 100c/130c. In addition, at least one of either the first mould 100 or the third mould 130, preferably both the moulds 100 and 130, comprises multiple channels 300 made along at least one of the side portions 100b and 100c (130b and 130c), preferably along both the side portions 100b and 100c (130b and 130c).

In a preferred version of this embodiment, the channels 300 are made along the whole side portion 100b and/or 100c and/or 130b and/or 130c.

In a preferred embodiment, the channels 300 are arranged in a line, preferably like a comb, along at least one of the side portions 100b/100c/130b/130c of the mould 100/130 and spaced apart from each other by a given spacing value. The given spacing value ranges between 20 mm and 500 mm.

In particular, the channels 300 are made along the surface of the side portions 100b/100c/130b/130c along a transverse direction preferably radial in relation to the axis A. The channels 300 arranged along the same side portion 100b/100c/130b/130c of the mould 100/130 are all connected together. In addition, in their turn, they are connected to conduits 400 that connect the channels 300 to the outside of the mould 100/130 and feed the channels 300. In particular, the number of channels 300 and the number of conduits 400 is connected by a ratio k. In particular, the ratio k between the number of channels 300 and the number of conduits 400 ranges between 10 and 100, preferably 20, 30, 40, 50, 60.

In other words, in the moulds 100/130, there is, preferably, a conduit 400 in every 20/30/40/50/60 channel 300. In other words, each conduit 400 feeds a number of channels 300 included in a range from 10 to 100, in particular 20, 30, 40, 50, 60.

In other words, the multiple channels 300 are grouped together in groups of channels 300, each group of channels 300 is directly fed by a conduit 400. Each group of channels 300 comprises a number of channels from 10 to 100, preferably 20, 30, 40, 50, 60. The groups of channels 300 made along the same side portion 100b/100c/130b/130c of the mould 100/130 communicate with each other. As a result, all the channels 300 made along the same side portion of the mould communicate with each other, preferably the channels 300 of the same group of channels 300 are configured to be fed through a preferential route from the corresponding conduit 400 connected to said group of channels 300. In more detail, the connection that places two different groups of channels 300 in communication comprises greater resistance to fluids, preferably a pressure drop, compared to the connection within the groups of channels 300.

In addition, at least one of the moulds 100, 130 comprises an outlet hole 500, an outlet conduit 501, a filter 502, and a pump 503.

In particular, the outlet hole 500 is made at any point of the mould 100, 130 and is connected to a filter 502 via the outlet conduit 501. In addition, downstream of the filter 502, a pump 503 is connected that is configured to suck on the side in which it is connected to the filter 502.

In other words, the outlet hole 500 is connected to the pump 503 via the connection conduit 501 and the filter 502 is positioned 503 along the connection conduit 501 between the outlet hole 500 and the pump. The pump 503 is connected to the outlet hole 500 so as to suck from the outlet hole 500.

In particular, in one non-limiting embodiment of this invention, there is just one outlet hole 500. In particular, thanks to the multiple channels 300 that are connected together, just one outlet hole 500 to suck the air is enough for one embodiment.

The filter 502 is configured to enable the passage of fluids in the gaseous state and block the passage of fluids in the liquid state. In this way, just air, or other fluids in the gaseous state, is sucked up and neither the resin nor other fluids in the liquid state is sucked up.

As will be illustrated below, the moulds 100 and 130 are hermetically closed and are in contact along the respective side portions 100b and 130b and 100c and 130c, so as to form a closed volume 200 inside of the moulds 100 and 130. As will be illustrated in detail, the channels 300 and the conduits 400 have the function of enabling the passage from the outside of the moulds 100 and 130 inside of the closed volume 200 of a fluid material, preferably liquid, comprising resin and a hardening catalyst, which impregnates the material sheets 101 to make the composite material of the blade 1.

In particular, a sealing element 140, preferably comprising neoprene and/or butyl rubber, is placed between the first 100 and the third moulds 130 to create said closed volume 200 between the first mould 100 and the third mould 130. In particular, the sealing element is placed between the side portions 100a, 100c of the first mould 100 and the side portions 130a, 130c of the third mould 130. In particular, it is in contact on one side with the side portions 100a, 100c of the first mould 100 and, on the other side, with the side portions 130a, 130c of the third mould 130.

The side portions 100b, 130b, 100c, 130c with the sealing element 140 placed between them define a closure that ensures a hermetic seal in the closed volume 200 between the first and the third mould 100, 130, in particular under high vacuum.

In addition, the method uses one or more inner moulds 102 that, in use, are housed in the closed volume 200.

The inner moulds 102 like the outer moulds 100, 130 can be re-used multiple times. In other words, the inner moulds 102 can be re-used to produce multiple blades in succession, preferably the inner moulds 102 can be re-used to implement the blade manufacturing method illustrated below multiple times. The inner moulds 102 are preferably not single-use.

In one embodiment, along the outer surface 102a of the inner moulds 102, there are multiple additional channels (not illustrated in the attached figures) grouped in groups of additional channels fed by multiple additional conduits, in particular each group of additional channels is directly fed by a corresponding additional conduit. In particular, each group of additional channels comprises a number of additional channels that ranges from 10 to 100, in particular 20/30/40/50/60. In other words, the ratio between the number of additional channels and the number of additional conduits is a value that ranges from 10 to 100, in particular 20/30/40/50/60. All the additional channels made on the same inner mould 102 are preferably connected to each other.

In one preferred embodiment, the additional channels are arranged spaced apart by an additional given spacing value. The additional given spacing value ranges between 20 mm and 700 mm.

The outer moulds 100 and 130 comprise a hermetic passageway (not illustrated in the figures attached) through which the additional conduits of the inner mould 102 pass from the closed volume 200 to the outside of the outer moulds 100 and 130.

As will be illustrated below, the additional channels and conduits serve to inject a fluid material, preferably comprising resin and a fixative inside the closed volume and to impregnate the sheets of fibre material so as to create the composite material of the structure of the blade 1.

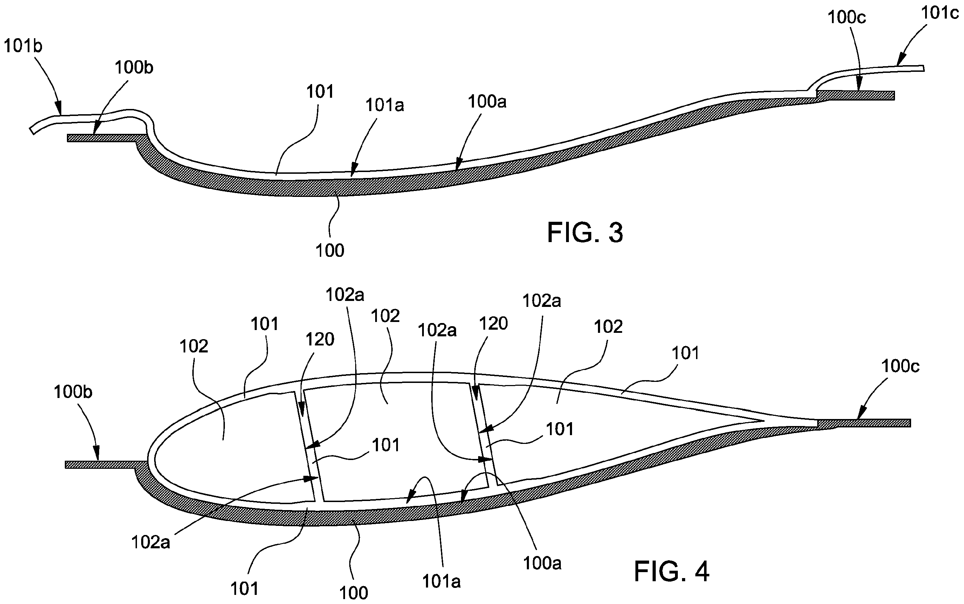

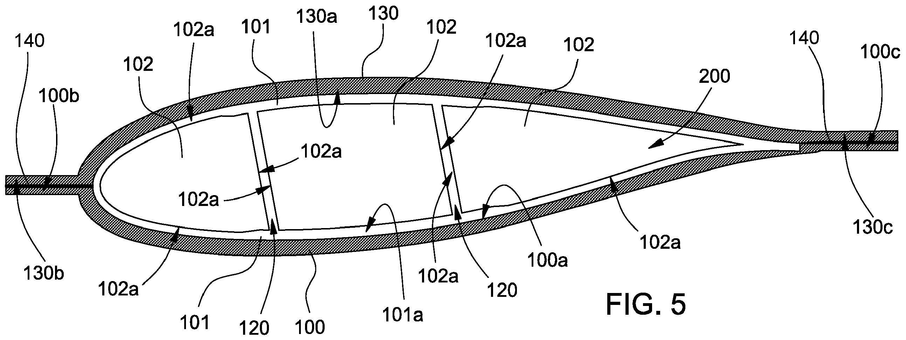

With reference to Figures 3, 4, and 5, the production method for the blade 1 comprises the steps of:
a) providing the first mould 100, which preferably defines an outer and lower first mould; in particular, the first mould comprises the central portion 100a and two side portions 100b and 100c;
b) placing on the first, preferably outer, mould 100, multiple sheets 101 of fibre of a material, preferably glass or carbon; in particular, placing the multiple fibre sheets 101 along the central portion 100a of the mould 100 and along the side portions 100b and 100c so as to have the central portions 101a of fibre sheets placed and side portions 101b and 101c of fibre sheets placed; in particular, the multiple sheets 101 are placed both one on top of the other and one next to the other; in particular, a first layer of sheets of material is placed on the mould 100 in which each sheet of material partially overlaps another and, subsequently, multiple layers of sheets of material are laid down, wherein, preferably during the placement, each sheet overlaps the next sheet for a portion of its sheet, preferably each sheet partially overlaps the adjacent sheets; in particular, the placement of the layers of sheets of material is carried out so that there is no clear discontinuity between the adjacent sheets and between the overlapping sheets; in addition, as said above, a portion of some sheets is preferably placed on the central mould 100a and placed on the side portions 100b or 100c so as to have central portions 101a of fibre sheets placed and side portions 101b and 101c of fibre sheets placed so that these sheets can be wound around successive moulds to form, at least partially, the side portions 80 and 81 of the blade 1;
bbis) in one optional embodiment of this invention: placing between the fibre sheets 101 of material during step b) one or more prefabricated elements and/or pultruded elements, preferably made of carbon fibre and/or glass to increase the stiffness of the structure of the blade 1 and/or core materials, and that will be incorporated between the sheets of fibre material; in particular, the prefabricated elements and/or the pultruded elements and/or the core materials are placed along the central portion 101a of the multiple sheets 101; in one preferred, but non-limiting, embodiment of this invention, the prefabricated elements and/or the pultruded elements and/or the core materials are exclusively placed along the portion 80 and 81 of the blade 1 and to form the webs 6;
btris) in one optional embodiment of this invention: placing between the sheets of fibre material during step b), one or more core elements 15, preferably comprising a PVC or PET or Balsa material, or other core materials, in particular that have a density ranging from 50 kg/m3 to 300 Kg/m3, in particular 60 or 80 or 100 or 120 kg/m3; in particular, the core elements 15 are placed along the side portions 80 and 81 of the blade 1;
c) placing the second stiff moulds 102 (Figure 4) above the multiple sheets 101 of fibre material previously laid down during step b); in particular, the second moulds 102 are placed above the central portion 101a of the multiple sheets that correspond to the central portion 100a of the mould 100;
cbis) in one optional embodiment of this invention: during step c), at least two of the second moulds 102 are positioned so that between said at least two of the second moulds 102 there is a gap 120 and, subsequently, multiple sheets 101 of fibre material are placed between the at least two of the second moulds 102 inside of the gaps 120 to create the at least one web 6; in particular, at least two of the second moulds 120 are positioned so that they are not in contact with each other along respective surfaces 102a facing each other for at least a portion of said surfaces 102a so as to form the at least one gap 120 between said at least two of the second moulds 102 along the at least one portion of said surfaces 102a; in an additional preferred form of this embodiment, one or more core elements 15 are placed in the gap 120, preferably comprising a PVC or PET or Balsa material, or other core materials, in particular that have a density ranging from 50 kg/m3 to 300 Kg/m3, in particular 60 or 80 or 100 or 120 kg/m3;
ctris) in an optional form of this invention, as an alternative to that in step cbis), before step c), at least two of the second moulds 102 are wrapped around by multiple sheets 101 of fibre material before being positioned above the mould 100; in this way, the second moulds 102 are positioned spaced apart between them, in particular not in direct contact between them, along respective surfaces 102a facing each other for at least a portion of said surfaces 102 so as to form the at least one gap 120 between said at least two of the second moulds 102 along the at least one portion of said surfaces 102a; in a preferred, but non-limiting, embodiment of this invention, the gap 120 is additionally filled with sheets 101 of fibre material to create the at least one web 6; in a preferred, but non-limiting, embodiment of this step ctris), in an additional preferred form of this embodiment and again before step c), one or more core elements 15 are placed in the gap 120, preferably comprising a PVC or PET or Balsa material, or other core materials, in particular that have a density ranging from 50 kg/m3 to 300 Kg/m3, in particular 60 or 80 or 100 or 120 kg/m3; in particular, the placement of the core elements 15 in the gap 120 is carried out before the placement of the sheets of material in the gap 120 or at the same time as this;
cquater) in one optional form of this invention: during step c), the back element 13 is also laid down above the plurality of sheets 101 of fibre material previously laid down during step b) and above the mould 100; in this embodiment, the second mould 102 adjacent to the back element 13 is not placed in contact with it and there is an additional gap that is filled with fibre sheets and preferably with core elements to create a back wall 40;
d) folding the side portions 101b and 101c of the multiple fibre sheets 101 previously placed on the side portions 100b and 100c of the mould 100 and placing them above the moulds 102;
dbis) in one optional embodiment of this invention: placing additional, multiple sheets 101 of fibre material, preferably glass or carbon, on the second moulds 120 and, preferably, on the side portions 101b and 101c of the multiple sheets laid on the moulds 102 during step d); in more detail, the multiple sheets 101 are placed both one on top of the other and one next to the other; in particular, a layer of sheets of material is placed on the second moulds 120, wherein each sheet of material partially overlaps another and the side portions 101b and 101c laid down on the second moulds 120; multiple layers of sheets of material are subsequently laid down, in which, during their placement, each sheet overlaps the adjacent sheet for a portion of its own sheet; in more detail, the placement of the layers of sheets 101 of material is carried out so that there is no clear discontinuity between the adjacent sheets 101 and between the overlapping sheets 101; in addition, as said above, a portion of some sheets 101 laid on the central mould 120 is placed on the side portions 101b or 101c of fibre sheets wrapped around the second moulds 102 to form, at least partially, the side portions 80 and 81 of the blade 1, so as to have a continuous and strengthened structure;
dtris) in one optional embodiment of this invention: placing between the sheets of fibre material during step d) and/or dbis) one or more core elements 15, preferably comprising a PVC or PET or Balsa material, or other core materials, in particular that have a density ranging from 50 kg/m3 to 300 Kg/m3, in particular 60 or 80 or 100 or 120 kg/m3; in particular, the core elements are put along the side portions 80 and 81 of the blade 1;
dquarter) in one optional embodiment of this invention: placing between the sheets of fibre material during step d) and/or dbis) and/or dtris), one or more prefabricated elements and/or pultruded elements preferably made of carbon fibre and/or glass to increase the stiffness of the structure of the blade 1 and/or core materials and that will be incorporated between the sheets of fibre material; in particular, the prefabricated elements and/or the pultruded elements and/or the core materials are placed along the central portion 101a of the multiple sheets 101, in one preferred, but non-limiting, embodiment of this invention; the prefabricated elements and/or the pultruded elements and/or the core materials are exclusively placed along the portion 80 and 81 of the blade and to form the webs 6;
e) placing a third mould 130, preferably an outer one, on the first mould 100 to create at least one closed volume 200 between the first mould 100 and the third mould 130 inside of which the multiple sheets 100 of material laid down and the second moulds 102, and, in the optional embodiments, the core elements 15 and/or core materials and/or prefabricated elements and/or pultruded elements and/or the back element 13 and or the back wall 40 and or the webs 6, are housed; in particular, the third mould 130 comprises a central portion 130a and two side portions 130b and 130c; in particular, during step e), the third mould 130 overlaps the first mould 100 so that the side portions 100b and 100c of the first mould 100 are in perfect contact with the side portions 130b and 130c of the third mould 130 and the closed volume 200 is created between the central portion 100a of the first mould 100 and the central portion 130a of the third mould 130; in particular, one mould 100 and another mould 130 are hermetically closed between them along the respective portions 100b and 130b and 100c and 130c. In this way, the closed volume 200 is hermetically closed towards the outside of the moulds 100 and 130 and they define a mould assembly that is closed in relation to the outside; as a result, the closed mould assembly encloses inside the moulds 102 and the fibres 101 and, in the optional embodiments, the core elements 15 and/or core materials and/or prefabricated elements and/or pultruded elements and/or the back element 13 and/or the back wall 40 and/or the webs 6;
f) in an optional embodiment: rotating the closed mould assembly so as to position the front edge of the blade 1 downwards; in particular, the mould assembly is rotated so that the portions 100b and 130b are turned downwards and the portions 100c and 130c face upwards;
g) in an optional embodiment: applying the vacuum to the closed mould assembly; in particular, through the channels of the first mould 100 and/or the third mould 130, preferably the vacuum is created without needing to use a vacuum seal bag;
h) injecting a fluid material, preferably liquid, comprising resin and a hardening catalyst, inside the mould assembly, in particular between the first mould 100 and the third mould 130, preferably through the channels 300 and the conduits 400 of at least one of the moulds 100 and 130, preferably both, and in one optional embodiment through the additional channels and the additional conduits of at least one of the inner moulds 102, preferably all the inner moulds, to impregnate the plurality of sheets 101 of fibre material, preferably glass or carbon, placed between the first 100 and the third mould 130; in a preferred embodiment that comprises step f), the fluid material is injected from the lower part of the mould assembly, in particular at the portions 130b and 100b, in particular in one embodiment the fluid material is epoxy resin;
i) waiting for the fluid material to harden so as to create a single structure of composite material comprising the fluid material comprising the resin and the plurality of sheets of fibre material and in the preferred, optional embodiments, the core elements 15 and/or the core materials and/or the prefabricated elements and/or the pultruded elements and/or the back element 13 and/or the back wall 40 and/or the webs 6; in this way, the blade is formed;
ibis) in one optional embodiment of this invention, one acts, thermally, on the temperature of the fluid material comprising resin previously injected into the mould assembly, for example by heating the mould assembly and/or the inner moulds 102 or cooling the mould assembly and/or the inner moulds 102;
l) removing the moulds 100 and 130;
m) removing the moulds 102 from inside the blade 1, in particular from the root of the blade 1; in more detail, the moulds 102 are removed from the cavity of the blade 1 through the root 2 of the blade that has an opening having a given diameter and/or a given minimum dimension; in more detail, each mould 102 comprises a maximum dimension that is transverse, in particular perpendicular, to the length of each mould that is less than the diameter and/or the minimum dimension of the opening made in the root 2 of the blade 1; in particular, the opening through the root 2 places the inside of the blade 1 in communication with the outside of the blade 1; in a preferred embodiment, there is more than one mould 102; in other words, the blade 1 comprises a cavity and an opening in the root 2 of the blade 1 having a given diameter or a minimum dimension that is transverse, in particular perpendicular, to the axis A; the diameter or the minimum dimension of the opening of the root 2 is greater than the maximum dimension of the diameter, and/or the dimension perpendicular and/or transverse to the length, and/or of the maximum dimension of a maximum section of each of the inner moulds 103; in this step, then, the extraction of the inner moulds through the cavity 2 of the blade 1 occurs after the blade 1 has been formed;
n) in an optional form of this invention: drilling holes radial to the axis A and holes parallel to the axis A along the circumferential surface of the root 2 of the blade 1 located at the opening of the cavity of the blade 1; these radial holes are configured to accommodate a fastener between the root of the blade 1 and a hub of a wind turbine.

In an optional form of this invention, the production method comprises the step of heating at least one of the moulds 100, 102, and/or 130, in particular heating one or more of the outer moulds 100 and/or 130.

In particular, the blade 1 being made of a single piece inside the closed volume 200 between the first mould 100 and the third mould 130.

In particular, the second moulds 102 are stiff, in particular so that the volume and/or the shape, preferably outer, of said second moulds 102 does not vary when subject to an applied pressure, in particular on the outer surface 102 of said second mould 102.

In a preferred, but non-limiting, embodiment of this invention, the second moulds 102 are stiff so that when a pressure is applied to the outer surface of the second mould 102 the transverse sections of the second mould 102 have a maximum movement, in particular in the direction in which the pressure acts, preferably less than 5 mm, in particular less than 2 mm, preferably less than 1 mm, in particular less than 0.5 mm. Preferably, said applied pressure is less than 2 bar, preferably ranging between 1 to 2 bar, in particular from 1.01 to 2 bar, in particular equal to 1.5 bar, 1.8 bar, or 1.9 bar.

In particular, the second moulds 102 are not elastically deformable and/or preferably cannot be inflated.

Thanks to the second stiff moulds 102, the invariability of its volume and/or of its shape is ensured, in particular when subject to the pressure exerted by the first and third moulds 100 and 130.

The technical effect is that you can design the thicknesses of the blade 1 and the inner part of the blade 1 more precisely because there will be no variabilities due to a deformable mould. In other words, the blade 1 will be produced exactly as designed and the process may be repeated. For example, thanks to the stiff second moulds 102, the inner angles 50 of the blade 1 may be made sharp and not rounded and the variability between the various blades 1 produced is less than the prior art, in particular compared to the other processes in which the blade is made of a single piece. Thus, the production process and/or final result can be controlled better than in the prior art, and repeated, and the blade 1 produced is closer to the design compared to the prior art.

In particular, thanks to the process described, with the use of the stiff second moulds 102, it is possible to design and produce the inner spaces of the blade 1 and/or the exact shape of the inner angles 50, because the stiff second moulds 102 make it possible to control the inner spaces in the production process, and repeatability. This influences the seal and resistance to forces of the blade 1 produced; in particular, thanks to this process, the inner angles 50 can be designed and produced both rounded and sharp, depending on the design specifications.

In particular, the blade manufacturing step comprises the step of placing the sealing element 140, preferably comprising neoprene and/or butyl rubber, between the first 100 and the third moulds 130 to create said closed volume 200 between the first mould 100 and the third mould 130; in particular, the sealing element is placed so that it is arranged between the side portions 100a, 100c of the first mould 100 and the side portions 130a, 130c of the third mould 130; in particular, it is in contact, on one side, with the side portions 100a, 100c of the first mould 100 and, on the other side, with the side portions 130a, 130c of the third mould 130.

In one optional embodiment of this invention, at least one of the moulds 100, 102, and/or 130, in particular at least one of the moulds 100 and/or 130 comprises multiple channels made along the inner surface of the mould 100 and/or 130 - in other words, along the surface that is in contact with the fibre sheets. In this way, the fluid material that is injected from the outside towards the inside of the at least one mould 100 and/or 130 is distributed uniformly inside the closed volume 200.

Wherein the fluid material injected in step h) comprises resin, for example, but not limited to, epoxy resin and/or polyester and/or vinyl ester and/or thermoplastic.

During step h), in one preferred, but non-limiting, embodiment of this invention, the fluid material is injected at room temperature.

During step h), in one preferred, but non-limiting, embodiment of this invention, the injected fluid material is heated or cooled before being injected.

In one optional embodiment, the method comprises the step of heating to between 10 and 100 degrees Celsius at least one of the following: mould 100, mould 102, mould 130, preferably one of the following: mould 100 or mould 130, preferably before step h), the infusion step for fluid material, or after step h), during step i), to fix the material comprising resin.

In particular, in which at least one of the following: mould 100, mould 102, and mould 130, preferably either mould 100 or mould 130, comprises a heating system for said mould, preferably comprising heating elements embedded in the mould body and configured to heat the mould to a desired temperature; in particular, the heating elements embedded in the body are selected from either: ducts configured to be traversed by a fluid having a temperature between 10 and 100 degrees; and electrical conductors configured to be traversed by an electric current and heat up by the Joule effect.

In one preferred embodiment of this invention, the steps of the method from a) to n) are carried out in alphabetical order and in the order in which they were illustrated, except for the optional steps that may not be carried out. When the optional steps are carried out, they are carried out in alphabetical order.

The blade 1 is thus produced via a single infusion of fluid material comprising resin. In other words, the blade 1 is produced with a single infusion; in particular, the blade 1 is held together exclusively via the fluid comprising resin and exclusively thanks to the single infusion that was carried out.

In particular, the blade 1 and its production does not involve any gluing step for parts of the blade subsequent to the infusion of the fluid material comprising resin.

In particular, it does not involve any step of gluing parts of the blade 1 subsequent to the single and only infusion step of fluid material comprising resin. In addition, in a preferred embodiment, the blade and its production does not involve any step of gluing parts of the blade, nor preceding the infusion of the resin nor after the infusion of the resin; in particular, the process involves a single infusion of the resin.

In other words, the fluid infusion step, which is only one, determines the adhesion of the parts of the blade 1 between them, in particular of all the parts of the blade 1, in particular the plurality of fibre sheets 101 and, in the optional embodiments, the core elements 15, the core materials and/or the prefabricated elements and/or the pultruded elements and/or the back element 13 and/or the back wall 40 and/or the web 6; preferably, the adhesion of all the parts of the blade 1 occurs exclusively during said infusion step for the fluid, comprising resin, that determines the adhesion of the various parts.

The whole process is carried out in a mould assembly that is completely closed, stiff, and can be re-used to create multiple blades. In this way, a vacuum seal bag is not needed, as in the prior art, and there are fewer waste materials during the process and a smaller production of waste and of single-use elements.

In one preferred, but non-limiting, embodiment, the mould assembly is made of composite material comprising resin and sheets of fibre material, for example glass and/or carbon; in particular, in one embodiment, the mould assembly is made of fibreglass.

In particular, the fibre sheets comprise glass and/or carbon fibres.

These fibre sheets are wrapped for 360° around the profile of the blade so as to ensure a higher resistance to forces, with an equal weight compared to the prior art, or an equal resistance to forces, with a lesser weight compared to the prior art. In other words, in a preferred embodiment, the fibre sheets are arranged in various layers, one above the over and one next to the other, paying attention to overlap one portion, and have a portion of fibre sheets in those placed next to each other. In this way, there is never clear discontinuity between the end of a fibre sheet and another and there is continuity in the arrangement of the fibre sheets and a greater resistance of the structure itself.

Thanks to this method, there are no limitations to the number of webs that can be inserted and incorporated inside the blade 1 that are incorporated into the composite material comprising fibre sheets and not glued above or below as in the prior art.

In other words, the webs are incorporated inside the composite material between the fibre sheets and the resin and become an integral part of the structure and, as a result, are always covered by at least one layer of fibre sheets and by the fluid material comprising resin on all sides of the webs.

In the same way, the core elements 15 and/or the core materials and/or the prefabricated elements and/or the pultruded elements and/or the back element 13 and/or the back wall 40 and/or the webs 6 are integrated inside the blade 1 and are always integral to the blade 1 itself and are incorporated into the structure of composite material comprising the fibre material sheets and the resin and are not glued along a surface of the blade as in the prior art but are integral with the blade itself and define a single body with the blade itself.

As a result, the core elements 15 and/or the core materials and/or the prefabricated elements and/or the pultruded elements and/or the back element 13 and/or the back wall 40 and/or the webs 6 are always covered on all sides by at least one layer of composite material of glass fibre or carbon and resin.

In addition, the blade produced thus in a cross-section view has one or more closed sections made of a single continuous fibre material; in particular, this fibre is not discontinuous nor is it cut.

In a preferred step of this invention, at least one or more of the following features including: the dimension of the sheets, the sequence of stacking the fibre sheets on at least one of the moulds 100, 102, 130, the shape and size of each mould 100, 102, 130 and/or the shape and size of the core elements 15 and/or the core materials and/or the prefabricated elements and/or the pultruded elements and/or the back element 13 and/or the back wall 40 and/or the webs 6 to be produced is defined using an electronic calculator.

In addition, the whole blade manufacturing process is first simulated and checked by an electronic calculator.

Thanks to this invention, the webs are integrated into the structure of composite material, in particular, they are integrated inside of an inner portion and an outer portion of the composite structure of glass fibre and/or carbon.

It is, finally, clear that modifications may be made to the method described, and variants produced thereof, without departing from the scope of the attached claims.

## Claims

1. A method for producing a wind blade of a wind turbine, wherein the blade (1) extends along a given axis (A) from a root (2) to a tip (3) of the blade (1); the blade comprising a composite material comprising filaments arranged according to at least two directions, in particular the composite material comprising fibre of a material; the method comprising the step of:
- laying on a first mould (100), preferably external, a plurality of sheets (101) of fibre of a material, preferably glass and/or carbon, in particular the first mould (100) comprising a central portion (100a) and two side portions (100b, 100c), preferably said step comprises laying a portion of the plurality of sheets (101) on the central portion (100a) of the first mould (100) and further portion of the plurality of sheets (101) on the side portions (100b, 100c) of the first mould (100) so as to have central portions (101a) of fibre sheets (101) laid and side portions (101b, 101c) of fibre sheets (101) laid;
the method being **characterized in that** comprising the steps of:
- laying second rigid moulds (102) on a portion of the plurality of sheets (101) of fibre material previously laid, in particular the second moulds (102) are laid over the central portion (101a) of the plurality of fibre sheets (101) laid in the previous step and at the central portion (100a) of the mould (100), in particular the outer surface (102a) of the second moulds (102) being stiff, wherein the second moulds 102 are stiff so that the volume and/or the shape, preferably outer, of said second moulds (102) does not vary when it is subject to a pressure applied, in particular on the outer surface (102) of said second mould (102);
- laying on the second moulds (102) sheets (101) of fibre material, preferably glass and/or carbon, and/or side portions (101b, 101c) of the sheets (101) of fibre laid on the first mould (100) and exceeding the dimensions of the first mould (100), in particular by folding said side portions (101b, 101c) of the sheets (101) of fibre on the second moulds (102);
- laying a third mould (130), preferably external, on the first mould (100) to create at least one closed volume (200), between the first mould (100) and the third mould (130), within which the plurality of laid sheets (101) of fibre and the second moulds (102) are housed; wherein said at least one between said first mould (100) and said third mould (130) comprises channels (300) connecting the outside of said at least one between said first mould (100) and said third mould (130) with said closed volume (200) such that a fluid material, preferably liquid, comprising resin can be injected into said closed volume (200); in particular, the third mould (130) comprising a central portion (100a) and two side portions (100b, 100c), in particular laying the side portions (100b, 100c) of the third mould (130) on the side portions (100b, 100c) of the first mould (100) to create at least the closed volume (200) between the first mould (100) and the third mould (130);
the method comprising the step of injecting the fluid material, preferably liquid, comprising resin to impregnate the plurality of sheets (101) of fibre material, preferably glass or carbon, housed within the closed volume (200) between the first (100) and third moulds (130) to create the blade (1);
preferably hardening said injected fluid;
removing the first (100) and third moulds (130) from the outside of the blade (1) thus formed, and removing the second moulds (102) from the inside of the blade (1) through a cavity (5) of the blade (100);
preferably, the blade (1) being made of a single piece inside the closed volume (200) between the first mould (100) and the third mould (130).

2. The method of claim 1, wherein the fluid infusion step determines adhesion of the blade parts (1) to each other, in particular of all the blade parts (1), preferably the adhesion of all the blade parts (1) to each other occurs exclusively during said fluid infusion step comprising resin which determines adhesion of the various parts, preferably no other bonding steps of blade parts (1) to each other occur.

3. The method of claim 1 or 2, wherein the infusion step is single for each blade (1) produced.

4. The method of any one of the preceding claims, comprising the step of heating at least one of the moulds, preferably heating one or more among the first mould (100), the third mould (130), and the second mould (102).

5. The method of any one of claims 1 to 4, wherein the fluid material is injected at room temperature and/or preheated.

6. The method of any one of the preceding claims, wherein at least one of the first (100), second (102), and third mould (130) comprises a heating system for said mould, preferably comprising heating elements embedded in the mould body and configured to heat the mould to a desired temperature; in particular, the heating elements embedded in the body are selected from the group consisting of: ducts configured to be traversed by a fluid having a temperature between 10 and 100 degrees; electrical conductors configured to be traversed by an electric current and heat up by the Joule effect.

7. The method of any one of the preceding claims, comprising the step of laying between the sheets (101) of fibre material one or more of: core elements (15) preferably comprising a PVC or PET or Balsa material, core materials, prefabricated elements, pultruded elements preferably made of carbon fibre to increase the stiffness of the blade structure (1); a back element (13); and/or the back wall (40); in particular one or more of said elements during the infusion step are embedded in the composite material, and in particular are covered on all sides by said fibre sheets (101) of material and the fluid material comprising the resin.

8. The method of any one of the preceding claims, wherein the closed volume (200), preferably hermetically sealed, between the first and third moulds (100, 130) is in communication through the exterior via conduits (400) and channels (300) through which the fluid material comprising resin is injected to impregnate the fibres of the material; at least one of the first mould and the third mould (100, 130) comprises the plurality of channels (300) made along at least one of the side portions (100b, 100c, 130b, 130c); the channels (300) being in communication with and fed by the conduits (400); the method comprises the step of impregnating the material fibres with the fluid material comprising resin through the conduits (400) and the channels (300); preferably the ratio of the number of channels (300) to the number of conduits (400) is equal to a k-value within a range of 10 to 100, preferably 20, 30, 40, 50, 60; preferably along an outer surface (102a) of the inner moulds (102) a plurality of further channels fed by further conduits are made; preferably the outer moulds (100, 130) comprise a hermetic passageway through which the further conduits of the inner mould (102) pass from the closed volume (200) outside the outer moulds (100, 130); preferably the method comprising the step of infusing the liquid material into the fibre sheets (101) of material through the further channels and the further conduits, preferably without using a vacuum seal bag.

9. The method of any one of the preceding claims, comprising the step of laying each sheet of the plurality of fibre sheets (101) of material on at least one of the first, second and third moulds (100, 130, 102) according to a predetermined stacking sequence; wherein a computer processor is configured to define the stacking sequence and/or the shape and size of each mould (100, 130, 102) and/or the shape and size of one or more of the following: core elements (15), core materials, prefabricated elements, pultruded elements, a back element (13), and/or the back wall (40) for each blade to be produced.

10. The method of any one of the preceding claims, the blade (1) comprising the cavity (5), and wherein the root (3) comprises an opening of said cavity (5); the opening in the root (3) having a certain diameter and/or a certain minimum size; each second mould (102) comprising a maximum transverse dimension, in particular perpendicular, to the length of each second mould (102) that is smaller than the diameter and/or minimum dimension of the opening made in the root (2) of the blade (1), in particular the opening through the root (2) connects the inside of the blade (1) with the outside of the blade (1); the method comprising the step of extracting the second moulds (102) through the cavity of the blade (1) after the blade (1) has been formed; preferably the second moulds (102) are greater in number than 1.

11. The method of any one of the preceding claims, comprising the step of drilling holes radial to the axis (A) and holes parallel to the axis (A) along the hollow surface of the root (2) of the blade (1) located at the opening of the blade cavity (1), preferably said radial holes are configured to accommodate a fastener between the root of the blade (1) and a hub of a wind turbine.

12. The method of any one of the preceding claims, comprising the step of laying a sealing element, preferably comprising a sealing element, preferably comprising neoprene and/or butyl rubber, between the first (100) and the third moulds (130) to create said closed volume (200) between the first mould (100) and the third mould (130); in particular laying the sealing element so it is placed between the side portions (100a, 100c) of the first mould (100) and the side portions (130a, 130c) of the third mould (130), in particular it is in contact on one side with the side portions (100a, 100c) of the first mould (100) and, on the other side, with the side portions (130a, 130c) of the third mould (130); the side portions (100b, 130b, 100c, 130c) with the interposing sealing element define a closure that ensures a hermetic seal in the closed volume (200) between the first mould and the third mould (100, 130).

13. The method of any one of the preceding claims, comprising the step of creating the vacuum in the closed volume (200) without using a vacuum seal bag.

14. The method of any one of the preceding claims, wherein the second moulds (102) are rigid, in particular so that the volume and/or the shape, preferably outer, of said second moulds (102) does not vary when it is subject to a pressure applied on the outer surface (102) of said second mould (102); in particular, when a pressure, preferably less than 2 bar, in particular ranging between 1 to 2 bar, in particular from 1.01 to 2 bar, is applied to the outer surface of the second mould (102), the transverse sections have a maximum movement, in particular in the direction in which the pressure acts, preferably less than 5 mm, in particular less than 2 mm, preferably less than 1 mm, in particular less than 0.5 mm; in particular, the second moulds (102) are not elastically deformable.

15. A wind blade for a wind turbine manufactured by the method of any one of the preceding claims.

16. The wind blade for a wind turbine of claim 15 comprising a tip (3) and a root (2) and extending along an axis (A) from the root (2) to the tip (3); the blade (1) comprising a single structure made of a composite material, the composite material comprising a plurality of fibres (101) of material and a hardened fluid material comprising resin; the hardened fluid material having been infused into the plurality of material fibres in a single infusion step so as to make the single structure so as to define a single integral body.

17. The wind blade of claim 16 comprising one or more of said elements: one or more core elements (15); one or more core materials; one or more prefabricated elements; pultruded elements; a rear element (13); a back wall (40); and one or more webs (6); wherein the one or more of said elements are embedded in the composite material and embedded therein, in particular the one or more of said elements are surrounded on all sides by at least one fibre sheet and the hardened fluid material comprising resin; preferably the one or more of said elements are of porous material and are impregnated with the hardened fluid material comprising resin.

## Patentansprüche

1. Ein Verfahren zur Herstellung eines Windflügels einer Windkraftanlage, wobei sich der Flügel (1) entlang einer vorgegebenen Achse (A) von einem Wurzelteil (2) bis zu einer Spitze (3) des Flügels (1) erstreckt; der Flügel ein Verbundmaterial umfasst, das Fasern umfasst, die in mindestens zwei Richtungen angeordnet sind, insbesondere das Verbundmaterial Fasern eines Materials umfasst; das Verfahren umfasst den Schritt:
- Auflegen einer Vielzahl von Materialfaserplatten (101), vorzugsweise aus Glas und/oder Kohlenstoff, auf eine erste Form (100), vorzugsweise eine äußere Form, insbesondere wobei die erste Form (100) einen Mittelteil (100a) und zwei Seitenbereiche (100b, 100c) umfasst; vorzugsweise umfasst der Schritt das Auflegen eines Teils der Vielzahl von Platten (101) auf den Mittelteil (100a) der ersten Form (100) und eines weiteren Teils der Platten (101) auf die Seitenbereiche (100b, 100c) der ersten Form (100), sodass Mittelbereiche (101a) von Materialfaserplatten (101) und Seitenbereiche (101b, 101c) der Platten (101) auf die erste Form (100) aufgelegt werden;
das Verfahren zeichnet sich dadurch aus, dass es die folgenden Schritte umfasst:
- Auflegen von zweiten starren Formen (102) auf einen Teil der zuvor aufgelegten Materialfaserplatten (101), insbesondere werden die zweiten Formen (102) auf den Mittelbereich (101a) der zuvor aufgelegten Materialfaserplatten (101) und auf den Mittelteil (100a) der Form (100) aufgelegt, wobei insbesondere die Außenfläche (102a) der zweiten Formen (102) steif ist, wobei die zweiten Formen (102) starr sind, sodass das Volumen und/oder die Form, vorzugsweise die Außenform, der zweiten Formen (102) unverändert bleibt, wenn darauf Druck ausgeübt wird, insbesondere auf die Außenfläche (102) der zweiten Formen (102);
- Auflegen von Materialfaserplatten (101), vorzugsweise Glas und/oder Kohlenstoff, auf die zweiten Formen (102) und/oder Seitenbereiche (101b, 101c) der auf die erste Form (100) aufgelegten Faserplatten (101), die die Abmessungen der ersten Form (100) überschreiten, insbesondere durch Falten der Seitenbereiche (101b, 101c) der Materialfaserplatten (101) auf die zweiten Formen (102);
- Auflegen einer dritten Form (130), vorzugsweise äußeren, auf die erste Form (100), um mindestens ein geschlossenes Volumen (200) zwischen der ersten Form (100) und der dritten Form (130) zu schaffen, innerhalb dessen die Vielzahl der aufgelegten Faserplatten (101) und die zweiten Formen (102) untergebracht sind; wobei mindestens eine zwischen der ersten Form (100) und der dritten Form (130) Kanäle (300) umfasst, die das Äußere der ersten Form (100) und der dritten Form (130) mit dem geschlossenen Volumen (200) verbinden, sodass ein flüssiges Material, vorzugsweise ein Harz enthaltendes, in das geschlossene Volumen (200) injiziert werden kann; insbesondere die dritte Form (130) umfasst einen Mittelteil (100a) und zwei Seitenbereiche (100b, 100c), insbesondere wird das Auflegen der Seitenbereiche (100b, 100c) der dritten Form (130) auf die Seitenbereiche (100b, 100c) der ersten Form (100) durchgeführt, um mindestens das geschlossene Volumen (200) zwischen der ersten Form (100) und der dritten Form (130) zu schaffen; das Verfahren umfasst den Schritt der Injektion des flüssigen Materials, vorzugsweise des Harzes, zur Imprägnierung der Vielzahl der im geschlossenen Volumen (200) zwischen der ersten (100) und der dritten Form (130) befindlichen Materialfaserplatten (101) zur Herstellung des Flügels (1);
vorzugsweise Aushärtung des injizierten Materials;
Entfernung der ersten (100) und dritten Form (130) von außen vom so geformten Flügel (1) und Entfernung der zweiten Formen (102) von innen durch eine Öffnung (5) des Flügels (100) ;
vorzugsweise der Flügel (1) in einem Stück innerhalb des geschlossenen Volumens (200) zwischen der ersten Form (100) und der dritten Form (130) hergestellt wird.

2. Das Verfahren nach Anspruch 1, wobei der Infusionsschritt das Verkleben der Flügelteile (1) miteinander bewirkt, insbesondere aller Flügelteile (1), vorzugsweise erfolgt das Verkleben aller Flügelteile (1) ausschließlich während des Infusionsschritts mit Harz, welches die Verklebung der verschiedenen Teile bewirkt, vorzugsweise erfolgen keine anderen Verklebungsschritte der Flügelteile (1) untereinander.

3. Das Verfahren nach Anspruch 1 oder 2, wobei der Infusionsschritt einmalig für jeden hergestellten Flügel (1) ist.

4. Das Verfahren nach einem der vorhergehenden Ansprüche, umfassend den Schritt des Erhitzens mindestens einer der Formen, vorzugsweise des Erhitzens einer oder mehrerer der ersten Form (100), der dritten Form (130) und der zweiten Form (102).

5. Das Verfahren nach einem der vorhergehenden Ansprüche, wobei das flüssige Material bei Raumtemperatur und/oder vorgeheizt injiziert wird.

6. Das Verfahren nach einem der vorhergehenden Ansprüche, wobei mindestens eine der ersten (100), zweiten (102) und dritten Form (130) ein Heizsystem für die Form umfasst, vorzugsweise umfasst das Heizsystem Heizelemente, die im Körper der Form eingebettet sind und so konfiguriert sind, dass sie die Form auf eine gewünschte Temperatur erhitzen; insbesondere sind die im Körper eingebetteten Heizelemente ausgewählt aus der Gruppe bestehend aus: Kanälen, die von einem Fluid mit einer Temperatur zwischen 10 und 100 Grad durchströmt werden; elektrischen Leitern, die von elektrischem Strom durchströmt werden und sich durch Joule-Effekt erwärmen.

7. Das Verfahren nach einem der vorhergehenden Ansprüche, umfassend den Schritt des Einlegens zwischen die Faserplatten (101) von einem oder mehreren: Kernen (15), vorzugsweise bestehend aus PVC- oder PET- oder Balsamaterial, Kernmaterialien, vorgefertigten Elementen, pultrudierten Elementen, vorzugsweise aus Kohlenstofffaser, um die Steifigkeit der Flügelstruktur (1) zu erhöhen; ein hinteres Element (13); und/oder die Rückwand (40); insbesondere werden eines oder mehrere dieser Elemente während des Infusionsschritts in das Verbundmaterial eingebettet und sind insbesondere an allen Seiten von den Faserplatten (101) des Materials und dem flüssigen Material mit Harz bedeckt.

8. Das Verfahren nach einem der vorhergehenden Ansprüche, wobei das geschlossene Volumen (200), vorzugsweise hermetisch abgedichtet, zwischen der ersten und der dritten Form (100, 130) durch Kanäle (400) und Leitungen (300) mit dem Äußeren in Verbindung steht, durch die das flüssige Material mit Harz injiziert wird, um die Materialfasern zu imprägnieren; mindestens eine der ersten Form und der dritten Form (100, 130) umfasst eine Vielzahl von Kanälen (300), die entlang mindestens eines der Seitenbereiche (100b, 100c, 130b, 130c) verlaufen; die Kanäle (300) stehen mit den Leitungen (400) in Verbindung und werden von diesen versorgt; das Verfahren umfasst den Schritt des Imprägnierens der Materialfasern mit dem flüssigen Material durch die Leitungen (400) und die Kanäle (300); vorzugsweise ist das Verhältnis der Anzahl der Kanäle (300) zur Anzahl der Leitungen (400) gleich einem k-Wert im Bereich von 10 bis 100, vorzugsweise 20, 30, 40, 50, 60; vorzugsweise entlang einer äußeren Oberfläche (102a) der inneren Formen (102) eine Vielzahl weiterer Kanäle, die von weiteren Leitungen gespeist werden, angebracht sind; vorzugsweise umfassen die äußeren Formen (100, 130) einen hermetischen Durchlass, durch den die weiteren Leitungen der inneren Form (102) aus dem geschlossenen Volumen (200) außerhalb der äußeren Formen (100, 130) verlaufen; vorzugsweise umfasst das Verfahren den Schritt des Infundierens des flüssigen Materials in die Materialfaserplatten (101) durch die weiteren Kanäle und die weiteren Leitungen, vorzugsweise ohne Verwendung eines Vakuumdichtungsbeutels.

9. Das Verfahren nach einem der vorhergehenden Ansprüche, umfassend den Schritt des Auflegens jeder Platte der Vielzahl von Materialfaserplatten (101) auf mindestens eine der ersten, zweiten und dritten Formen (100, 130, 102) gemäß einer vorbestimmten Stapelreihenfolge; wobei ein Computerprozessor so konfiguriert ist, dass er die Stapelreihenfolge und/oder die Form und Größe jeder Form (100, 130, 102) und/oder die Form und Größe von einem oder mehreren der folgenden: Kerne (15), Kernmaterialien, vorgefertigte Elemente, pultrudierte Elemente, hintere Elemente (13) und/oder Rückwand (40) zum Zeitpunkt des Auflegens der Platten und/oder vor dem Schritt der Erzeugung des geschlossenen Volumens berechnet

10. Das Verfahren nach einem der vorhergehenden Ansprüche, wobei das Blatt (1) die Höhlung (5) umfasst und die Wurzel (3) eine Öffnung dieser Höhlung (5) umfasst; die Öffnung in der Wurzel (3) weist einen bestimmten Durchmesser und/oder eine bestimmte Mindestgröße auf; jede zweite Form (102) umfasst eine maximale Quererstreckung, insbesondere senkrecht zur Länge jeder zweiten Form (102), die kleiner ist als der Durchmesser und/oder die Mindestgröße der in der Wurzel (2) des Blatts (1) gefertigten Öffnung, wobei die Öffnung durch die Wurzel (2) das Innere des Blatts (1) mit dem Äußeren des Blatts (1) verbindet; das Verfahren umfasst den Schritt des Herausziehens der zweiten Formen (102) durch die Höhlung des Blatts (1), nachdem das Blatt (1) geformt wurde; vorzugsweise beträgt die Anzahl der zweiten Formen (102) mehr als 1.

11. Das Verfahren nach einem der vorhergehenden Ansprüche, umfassend den Schritt des Bohrens von Löchern radial zur Achse (A) und Löchern parallel zur Achse (A) entlang der hohlen Oberfläche der Wurzel (2) des Blatts (1), die sich an der Öffnung der Höhlung des Blatts (1) befindet, vorzugsweise sind die genannten radialen Löcher konfiguriert, um eine Befestigung zwischen der Wurzel des Blatts (1) und einer Nabe einer Windkraftanlage aufzunehmen.

12. Das Verfahren nach einem der vorhergehenden Ansprüche, umfassend den Schritt des Einlegens eines Dichtelements, vorzugsweise umfassend ein Dichtelement, vorzugsweise umfassend Neopren und/oder Butylkautschuk, zwischen die erste (100) und die dritte Form (130), um das geschlossene Volumen (200) zwischen der ersten Form (100) und der dritten Form (130) zu schaffen; insbesondere wird das Dichtelement so eingelegt, dass es zwischen den Seitenabschnitten (100a, 100c) der ersten Form (100) und den Seitenabschnitten (130a, 130c) der dritten Form (130) platziert wird, insbesondere ist es auf einer Seite mit den Seitenabschnitten (100a, 100c) der ersten Form (100) und auf der anderen Seite mit den Seitenabschnitten (130a, 130c) der dritten Form (130) in Kontakt; die Seitenabschnitte (100b, 130b, 100c, 130c) mit dem dazwischenliegenden Dichtelement definieren einen Abschluss, der eine hermetische Abdichtung im geschlossenen Volumen (200) zwischen der ersten und der dritten Form (100, 130) gewährleistet.

13. Das Verfahren nach einem der vorhergehenden Ansprüche, umfassend den Schritt der Erzeugung des Vakuums im geschlossenen Volumen (200), ohne eine Vakuumverpackung zu verwenden.

14. Das Verfahren nach einem der vorhergehenden Ansprüche, wobei die zweiten Formen (102) starr sind, insbesondere so, dass das Volumen und/oder die Form, vorzugsweise die äußere, der genannten zweiten Formen (102) sich nicht ändert, wenn sie einem Druck ausgesetzt sind, der auf die äußere Fläche (102) der genannten zweiten Form (102) angewendet wird; insbesondere, wenn ein Druck, vorzugsweise weniger als 2 bar, insbesondere im Bereich von 1 bis 2 bar, insbesondere von 1,01 bis 2 bar, auf die äußere Fläche der zweiten Form (102) angewendet wird, haben die Querschnitte eine maximale Bewegung, insbesondere in die Richtung, in die der Druck wirkt, vorzugsweise weniger als 5 mm, insbesondere weniger als 2 mm, vorzugsweise weniger als 1 mm, insbesondere weniger als 0,5 mm; insbesondere sind die zweiten Formen (102) nicht elastisch verformbar.

15. Ein Rotorblatt für eine Windkraftanlage, hergestellt nach dem Verfahren eines der vorhergehenden Ansprüche.

16. Das Rotorblatt für eine Windkraftanlage nach Anspruch 15, umfassend eine Spitze (3) und eine Wurzel (2) und sich entlang einer Achse (A) von der Wurzel (2) bis zur Spitze (3) erstreckend; das Blatt (1) umfasst eine einteilige Struktur aus einem Verbundmaterial, wobei das Verbundmaterial eine Vielzahl von Fasern (101) eines Materials und ein gehärtetes Flüssigmaterial umfassend Harz umfasst; das gehärtete Flüssigmaterial wurde in einem einzigen Infusionsschritt in die Vielzahl der Materialfasern infundiert, um die einteilige Struktur zu bilden und einen einheitlichen Körper zu definieren.

17. Das Rotorblatt nach Anspruch 16, umfassend eines oder mehrere der genannten Elemente: ein oder mehrere Kernelemente (15); ein oder mehrere Kernmaterialien; ein oder mehrere vorgefertigte Elemente; pultrudierte Elemente; ein hinteres Element (13); eine Rückwand (40); und ein oder mehrere Stege (6); wobei eines oder mehrere dieser Elemente im Verbundmaterial eingebettet sind und darin eingeschlossen sind, insbesondere sind eines oder mehrere dieser Elemente auf allen Seiten von mindestens einer Faserschicht und dem gehärteten Flüssigmaterial umfassend Harz umgeben; vorzugsweise bestehen eines oder mehrere dieser Elemente aus porösem Material und sind mit dem gehärteten Flüssigmaterial umfassend Harz imprägniert.

## Revendications

1. Un procédé de production d'une pale d'éolienne, dans lequel la pale (1) s'étend le long d'un axe donné (A) depuis une racine (2) jusqu'à une pointe (3) de la pale (1); la pale comprenant un matériau composite comprenant des filaments disposés selon au moins deux directions, en particulier le matériau composite comprenant des fibres d'un matériau; le procédé comprenant l'étape de:
- déposer sur un premier moule (100), de préférence externe, une pluralité de feuilles (101) de fibres d'un matériau, de préférence en verre et/ou carbone, en particulier le premier moule (100) comprenant une portion centrale (100a) et deux portions latérales (100b, 100c), de préférence ladite étape comprend le dépôt d'une partie de la pluralité de feuilles (101) sur la portion centrale (100a) du premier moule (100) et une autre partie de la pluralité de feuilles (101) sur les portions latérales (100b, 100c) du premier moule (100) de manière à avoir des portions centrales (101a) de feuilles de fibres (101) déposées et des portions latérales (101b, 101c) de feuilles de fibres (101) déposées;
le procédé étant **caractérisé en ce qu'**il comprend les étapes de:
- déposer des deuxièmes moules rigides (102) sur une partie de la pluralité de feuilles (101) de matériau fibreux précédemment déposées, en particulier les deuxièmes moules (102) sont déposés sur la portion centrale (101a) de la pluralité de feuilles de fibres (101) déposées lors de l'étape précédente et sur la portion centrale (100a) du moule (100), en particulier la surface extérieure (102a) des deuxièmes moules (102) étant rigide, les deuxièmes moules (102) étant rigides de sorte que le volume et/ou la forme, de préférence extérieure, desdits deuxièmes moules (102) ne varient pas lorsqu'ils sont soumis à une pression appliquée, en particulier sur la surface extérieure (102) dudit deuxième moule (102);
- déposer sur les deuxièmes moules (102) des feuilles (101) de matériau fibreux, de préférence en verre et/ou carbone, et/ou des portions latérales (101b, 101c) des feuilles (101) de fibres déposées sur le premier moule (100) et dépassant les dimensions du premier moule (100), en particulier en repliant lesdites portions latérales (101b, 101c) des feuilles (101) de fibres sur les deuxièmes moules (102);
- déposer un troisième moule (130), de préférence externe, sur le premier moule (100) pour créer au moins un volume fermé (200), entre le premier moule (100) et le troisième moule (130), dans lequel sont logés la pluralité de feuilles de fibres (101) déposées et les deuxièmes moules (102); dans lequel ledit au moins un desdits premier moule (100) et troisième moule (130) comprend des canaux (300) reliant l'extérieur dudit au moins un desdits premier moule (100) et troisième moule (130) avec ledit volume fermé (200) de sorte qu'un matériau fluide, de préférence liquide, comprenant de la résine puisse être injecté dans ledit volume fermé (200); en particulier, le troisième moule (130) comprenant une portion centrale (100a) et deux portions latérales (100b, 100c), en particulier en déposant les portions latérales (100b, 100c) du troisième moule (130) sur les portions latérales (100b, 100c) du premier moule (100) pour créer au moins le volume fermé (200) entre le premier moule (100) et le troisième moule (130);
le procédé comprenant l'étape d'injection du matériau fluide, de préférence liquide, comprenant de la résine pour imprégner la pluralité de feuilles (101) de matériau fibreux, de préférence en verre ou carbone, logées dans le volume fermé (200) entre le premier (100) et le troisième moule (130) pour créer la pale (1);
de préférence durcir le fluide injecté;
retirer le premier (100) et le troisième moule (130) de l'extérieur de la pale (1) ainsi formée, et retirer les deuxièmes moules (102) de l'intérieur de la pale (1) par une cavité (5) de la pale (100);
de préférence, la pale (1) étant fabriquée en une seule pièce à l'intérieur du volume fermé (200) entre le premier moule (100) et le troisième moule (130).

2. Le procédé de la revendication 1, dans lequel l'étape d'infusion de fluide détermine l'adhérence des parties de la pale (1) entre elles, en particulier de toutes les parties de la pale (1), de préférence l'adhérence de toutes les parties de la pale (1) entre elles se produit exclusivement pendant ladite étape d'infusion de fluide comprenant de la résine qui détermine l'adhérence des différentes parties, de préférence aucune autre étape de liaison des parties de la pale (1) entre elles ne se produit.

3. Le procédé selon la revendication 1 ou 2, dans lequel l'étape d'infusion est unique pour chaque pale (1) produite.

4. Le procédé selon l'une quelconque des revendications précédentes, comprenant l'étape de chauffage d'au moins un des moules, de préférence le chauffage d'un ou plusieurs parmi le premier moule (100), le troisième moule (130) et le deuxième moule (102).

5. Le procédé selon l'une quelconque des revendications 1 à 4, dans lequel le matériau fluide est injecté à température ambiante et/ou préchauffé.

6. Le procédé selon l'une quelconque des revendications précédentes, dans lequel au moins l'un des premier (100), deuxième (102) et troisième moule (130) comprend un système de chauffage pour ledit moule, de préférence comprenant des éléments chauffants intégrés dans le corps du moule et configurés pour chauffer le moule à une température souhaitée; en particulier, les éléments chauffants intégrés dans le corps sont choisis dans le groupe comprenant : des conduits configurés pour être traversés par un fluide ayant une température entre 10 et 100 degrés; des conducteurs électriques configurés pour être traversés par un courant électrique et chauffer par effet Joule.

7. Le procédé selon l'une quelconque des revendications précédentes, comprenant l'étape de disposition entre les feuilles (101) de matériau fibreux d'un ou plusieurs éléments de noyau (15) comprenant de préférence un matériau PVC ou PET ou Balsa, des matériaux de noyau, des éléments préfabriqués, des éléments pultrudés de préférence en fibre de carbone pour augmenter la rigidité de la structure de la pale (1); un élément dorsal (13); et/ou la paroi arrière (40); en particulier un ou plusieurs desdits éléments pendant l'étape d'infusion sont intégrés dans le matériau composite, et en particulier sont recouverts sur tous les côtés par lesdites feuilles de fibres (101) de matériau et le matériau fluide comprenant la résine.

8. Le procédé selon l'une quelconque des revendications précédentes, dans lequel le volume fermé (200), de préférence scellé hermétiquement, entre les premier et troisième moules (100, 130) est en communication avec l'extérieur via des conduits (400) et des canaux (300) par lesquels le matériau fluide comprenant de la résine est injecté pour imprégner les fibres du matériau; au moins l'un des premier moule et du troisième moule (100, 130) comprend la pluralité de canaux (300) réalisés le long d'au moins l'une des portions latérales (100b, 100c, 130b, 130c); les canaux (300) étant en communication avec et alimentés par les conduits (400); le procédé comprend l'étape d'imprégnation des fibres du matériau avec le matériau fluide comprenant de la résine par les conduits (400) et les canaux (300); de préférence le rapport entre le nombre de canaux (300) et le nombre de conduits (400) est égal à une valeur k dans une plage de 10 à 100, de préférence 20, 30, 40, 50, 60; de préférence le long d'une surface extérieure (102a) des moules intérieurs (102) une pluralité de canaux supplémentaires alimentés par des conduits supplémentaires sont réalisés; de préférence les moules extérieurs (100, 130) comprennent un passage hermétique par lequel les conduits supplémentaires du moule intérieur (102) passent depuis le volume fermé (200) vers l'extérieur des moules extérieurs (100, 130); de préférence le procédé comprenant l'étape d'infusion du matériau liquide dans les feuilles de fibres (101) de matériau par les canaux supplémentaires et les conduits supplémentaires, de préférence sans utiliser un sac de scellement sous vide.

9. Le procédé selon l'une quelconque des revendications précédentes, comprenant l'étape de déposer chaque feuille de la pluralité de feuilles de fibres (101) de matériau sur au moins l'un des premier, deuxième et troisième moules (100, 130, 102) selon une séquence de superposition prédéterminée; dans lequel un processeur informatique est configuré pour définir la séquence de superposition et/ou la forme et la taille de chaque moule (100, 130, 102) et/ou la forme et la taille d'un ou plusieurs des éléments suivants : éléments de noyau (15), matériaux de noyau, éléments préfabriqués, éléments pultrudés, un élément dorsal (13), et/ou la paroi arrière (40) pour chaque pale à produire.

10. Le procédé selon l'une quelconque des revendications précédentes, la pale (1) comprenant la cavité (5), et dans lequel la racine (3) comprend une ouverture de ladite cavité (5); l'ouverture dans la racine (3) ayant un certain diamètre et/ou une certaine dimension minimale; chaque deuxième moule (102) comprenant une dimension transversale maximale, en particulier perpendiculaire, à la longueur de chaque deuxième moule (102) qui est inférieure au diamètre et/ou à la dimension minimale de l'ouverture réalisée dans la racine (2) de la pale (1), en particulier l'ouverture à travers la racine (2) relie l'intérieur de la pale (1) à l'extérieur de la pale (1); le procédé comprenant l'étape d'extraction des deuxièmes moules (102) par la cavité de la pale (1) après que la pale (1) a été formée; de préférence le nombre de deuxièmes moules (102) est supérieur à 1.

11. Le procédé selon l'une quelconque des revendications précédentes, comprenant l'étape de perçage de trous radiaux par rapport à l'axe (A) et de trous parallèles à l'axe (A) le long de la surface creuse de la racine (2) de la pale (1) située à l'ouverture de la cavité de la pale (1), de préférence lesdits trous radiaux sont configurés pour accueillir un dispositif de fixation entre la racine de la pale (1) et un moyeu d'une éolienne.

12. Le procédé selon l'une quelconque des revendications précédentes, comprenant l'étape de déposer un élément d'étanchéité, comprenant de préférence un élément d'étanchéité, comprenant de préférence du néoprène et/ou du caoutchouc butyle, entre le premier (100) et le troisième moule (130) pour créer ledit volume fermé (200) entre le premier moule (100) et le troisième moule (130); en particulier en déposant l'élément d'étanchéité de sorte qu'il soit placé entre les portions latérales (100a, 100c) du premier moule (100) et les portions latérales (130a, 130c) du troisième moule (130), en particulier il est en contact d'un côté avec les portions latérales (100a, 100c) du premier moule (100) et, de l'autre côté, avec les portions latérales (130a, 130c) du troisième moule (130); les portions latérales (100b, 130b, 100c, 130c) avec l'élément d'étanchéité interposé définissent une fermeture qui assure une étanchéité hermétique dans le volume fermé (200) entre le premier moule et le troisième moule (100, 130).

13. Le procédé selon l'une quelconque des revendications précédentes, comprenant l'étape de créer le vide dans le volume fermé (200) sans utiliser un sac de scellement sous vide.

14. Le procédé selon l'une quelconque des revendications précédentes, dans lequel les deuxièmes moules (102) sont rigides, en particulier de sorte que le volume et/ou la forme, de préférence extérieure, desdits deuxièmes moules (102) ne varient pas lorsqu'ils sont soumis à une pression appliquée sur la surface extérieure (102) dudit deuxième moule (102); en particulier, lorsqu'une pression, de préférence inférieure à 2 bars, en particulier entre 1 et 2 bars, en particulier de 1,01 à 2 bars, est appliquée sur la surface extérieure du deuxième moule (102), les sections transversales présentent un déplacement maximal, en particulier dans la direction dans laquelle la pression agit, de préférence inférieur à 5 mm, en particulier inférieur à 2 mm, de préférence inférieur à 1 mm, en particulier inférieur à 0,5 mm; en particulier, les deuxièmes moules (102) ne sont pas élastiquement déformables.

15. Une pale d'éolienne fabriquée par le procédé selon l'une quelconque des revendications précédentes.

16. La pale d'éolienne de la revendication 15 comprenant une pointe (3) et une racine (2) et s'étendant le long d'un axe (A) de la racine (2) à la pointe (3); la pale (1) comprenant une structure unique en matériau composite, le matériau composite comprenant une pluralité de fibres (101) de matériau et un matériau fluide durci comprenant de la résine; le matériau fluide durci ayant été infusé dans la pluralité de fibres de matériau en une seule étape d'infusion de manière à former la structure unique définissant un corps intégral unique.

17. La pale d'éolienne de la revendication 16 comprenant un ou plusieurs desdits éléments : un ou plusieurs éléments de noyau (15); un ou plusieurs matériaux de noyau; un ou plusieurs éléments préfabriqués; des éléments pultrudés; un élément dorsal (13); une paroi arrière (40); et une ou plusieurs âmes (6); dans lequel le ou lesdits éléments sont intégrés dans le matériau composite et intégrés dedans, en particulier le ou lesdits éléments sont entourés de tous les côtés par au moins une feuille de fibre et le matériau fluide durci comprenant de la résine; de préférence, le ou lesdits éléments sont en matériau poreux et sont imprégnés du matériau fluide durci comprenant de la résine.
